# EUROPÄISCHE PATENTSCHRIFT

(11) **EP 1 463 660 B1**
(45) Veröffentlichungstag und Bekanntmachung des Hinweises auf die Patenterteilung: **26.10.2005**
(21) Anmeldenummer: 02799067.0
(22) Anmeldetag: 20.12.2002
(51) Int. Cl.: B62D 5/04, F16C 27/04

(54) **ELEKTRISCH UNTERSTÜTZTE HILFSKRAFTLENKUNG FÜR KRAFTFAHRZEUGE**
ELECTRICALLY-SUPPORTED POWER ASSISTED STEERING FOR MOTOR VEHICLES
DIRECTION ASSISTEE A ASSISTANCE ELECTRIQUE POUR AUTOMOBILES

(30) Priorität: 10.01.2002 DE 10200609
(43) Veröffentlichungstag der Anmeldung: 06.10.2004
(73) Patentinhaber: INA-Schaeffler KG, 91074 Herzogenaurach (DE)
(72) Erfinder: ZERNICKEL, Alexander, 91074 Herzogenaurach (DE); WAGNER, Jörg, 91094 Oberreichenbach (DE)
(86) Internationale Anmeldenummer: PCT/EP2002/014626
(87) Internationale Veröffentlichungsnummer: WO 2003/057548

(56) Entgegenhaltungen:
- DE-A- 2 338 687
- DE-A- 2 741 057
- DE-A- 19 828 513
- DE-U- 29 820 079

## Beschreibung

### Anwendungsgebiet der Erfindung

Die Erfindung begrifft eine elektrisch unterstützte Hilfskraftlenkung für Kraftfahrzeuge mit einer Eingangswelle, die mit einem Lenkrad zur Übertragung eines Lenkdrehmomentes in Wirkverbindung steht, einem Ausgangsglied, dass mit zu lenkenden Rädern in Wirkverbindung steht, mit einem Servomotor, der direkt oder indirekt eine Hilfskraft auf die Eingangswelle oder das Ausgangsglied ausübt, wobei die Ausgangswelle und das Ausgangsglied über ein drehelastisches Glied derart miteinander verbunden sind, dass zwischen der Eingangswelle und dem Ausgangsglied eine begrenzte Verdrehbewegung möglich ist und mit einer Erfassungseinheit, die mindestens einen Sensor zum Erfassen der Richtung und der Stärke des auf die Eingangswelle wirkenden Lenkdrehmomentes enthält, wobei die Eingangswelle an ihrem dem Lenkrad zugewandten Ende in einem Gehäuse über ein Wälzlager abgestützt ist.

### Hintergrund der Erfindung

Solch elektrisch unterstützte Hilfskraftlenkungen für Kraftfahrzeuge sind hydraulischen Servolenkungen in vielfacher Hinsicht überlegen. Sie arbeiten mit einem elektronisch geregelten Elektromotor und ersetzen damit das herkömmliche hydraulische System. So wird der technische Aufwand reduziert, denn für Regelung und Lenkunterstützung ist nur noch ein unproblematisches Medium erforderlich, der elektrische Strom. Gleichzeitig steigern die Hersteller dank einfacher Systemintegration, schnellem Einbau sowie optimaler Anpassung an das Fahrzeug ihre Produktivität. Und weil sich die elektrische Steuerung optimal auf Fahrdynamik und Fahrzeughandling einstellt, werden auch die Fahreigenschaften des Wagens deutlich verbessert. Darüber hinaus verbraucht diese neue Lenkungsart wesentlich weniger Energie als die hydraulische Lösung, weil nur dann Energie benötigt wird, wenn tatsächlich gelenkt wird. Anders als bei der konventionellen Servolenkung ist nämlich kein permanenter hydraulischer Druck erforderlich. Außer der Servoeinheit gibt es keine Aggregate: Lenkventil, Lenkungspumpe, Ölbehälter und Hochdruckschläuche entfallen. Das spart Gewicht und vereinfacht den Einbau.

Derartig vorteilhafte elektrisch unterstützte Hilfskraftlenkungen sind dem Fachmann hinreichend bekannt. Diese sind beispielsweise der DE 197 47 638 C1, DE 198 28 513 A1, DE 199 35 283 A1 und der DE 298 20 079 U1 entnehmbar. Das Lenkdrehmoment wird durch eine Erfassungseinheit gemessen, die aus wenigstens einem Impulsgeber und einem Sensor besteht. Impulsgeber und Sensor sind dabei voneinander beabstandet angeordnet, wobei eines der beiden Teile mit der Eingangswelle verbunden ist. Die Eingangswelle wiederum ist über ein Wälzlager in einem Gehäuse aufgenommen. Es liegt auf der Hand, dass durch das Wälzlager die Auswertung des Lenkdrehmomentes beeinflusst wird. Ist beispielsweise zuviel Lagerspiel vorhanden, kann die Funktion des Signalgebers bzw. Sensors in negativer Weise beeinflusst werden. Dieser übermittelt dann falsche Steuerungswerte an den Servomotor, die sich negativ auf das Lenkungsverhalten auswirken.

Nach dem bisherigen Stand der Technik hat man diesen Nachteil dadurch zu beheben versucht, in dem man die Eingangswelle einer exakten Führung unterworfen hat. Diese exakte Wellenführung wiederum soll ein präzises Arbeiten von Impulsgeber und Sensor ermöglichen, dass sich positiv auf das Lenkverhalten auswirkt, weil entsprechend dem real ermittelten Lenkdrehmoment die richtige Dosierung des unterstützenden Motors eingeleitet wird. Realisiert wurde dies durch Einsatz eines massives Wälzlagers, das zur Reduzierung seines Radialspiels in sehr aufwendiger Weise bearbeitet wurde. Dies erfolgte durch Schleifen der Laufbahnen des Lagers. Ein solch aufwendig bearbeitetes massives Wälzlager ist aber sehr teuer und beeinflusst damit auch die Kosten der Hilfskraftlenkung.

In diesem Zusammenhang ist aus der DE 2 741 057 A1 eine Vorrichtung zum Lagern von Wellen in einem Kraftfahrzeuglenkgetriebe bekannt geworden, bei der das Wälzlager mit über dem Umfang verteilten elastisch verformbaren Wälzkörpern versehen ist, deren Hüllkreis kleiner als der Durchmesser der gelagerten Welle ist. Dieses vorgespannte Wälzlager wird im Gegensatz zur Erfindung zur Dämpfung von Schwingungen und Geräuschen eingesetzt, die durch Fahrbahnstöße über die Räder und die Lenkhebel auf die Lenkwelle über tragen werden. Dies wiederum bedeutet, dass diese Vorveröffentlichung mit der erfindungsgemäßen Lösung bestenfalls in einem indirekten Zusammenhang steht.

### Zusammenfassung der Erfindung

Aufgabe der Erfindung ist es daher eine Hilfskraftlenkung bereitzustellen, die in ihrer Gesamtheit kostengünstig herstellbar und eine exakte Erfassung des Lenkdrehmomentes ermöglicht.

Erfindungsgemäß wird diese Aufgabe nach dem kennzeichnenden Teil von Anspruch 1 gelöst.

Durch die erfindungsgemäß ausgebildete Lageranordnung wird die Eingangswelle der Hilfskraftlenkung praktisch spielfrei geführt, wobei im unbelasteten Zustand die elastischen Wälzkörper die Welle tragen. Bei einer größer werdenden Radiallast werden die elastisch verformbaren Zylinderrollen in ihrem Durchmesser verringert, bis die Abstützung der Eingangswelle durch die übrigen im erfinderischen Sinne nicht elastischen Zylinderrollen erfolgt. Auf diese Weise ist sichergestellt, dass die Eingangswelle unter allen Belastungsbedingungen präzise geführt ist, so dass das Lenkdrehmoment durch die Auswerteeinheit real erfaßt werden kann und somit ein realistisches Ansprechverhalten des Servomotors bewirkt wird. Das erfindungsgemäße aus zwei unterschiedlichen Zylinderrollen bestehende Lager kann entweder vollrollig oder als Käfiglager ausgebildet sein.

Die Ausbildung der elastisch verformbaren Zylinderrollen als dünnwandige spanlos geformte Hohlrollen hat den Vorteil, dass die Hohlzylinder erstens in einfacher Weise herstellbar und zweitens eine, wenn auch geringfügige, Gewichtsreduzierung des Lagers bewirken. Über die radial nach innen weisenden Borde kann in sehr einfacher Weise auf das Elastizitätsverhalten der Hohlrollen eingewirkt werden. Wird die radiale Ausdehnung der Borde erhöht, wird das elastisches Zusammenpressen der Hohlzylinder erschwert.

Vorteilhafte Weiterentwicklungen der Erfindung sind in den Unteransprüchen beschrieben.

So ist nach Anspruch 2 vorgesehen, dass die elastisch verformbaren Zylinderrollen an drei gleichmäßig voneinander beabstandeten Umfangsstellen angeordnet sind. Diese Anordnung hat den Vorteil, dass die Welle durch drei Punkte allseitig in sicherer Weise zentriert ist.

Nach Anspruch 3 hat es sich als vorteilhaft erwiesen, wenn die radiale Ausdehnung der Borde der Wanddicke der Hohlzylinder entspricht..

Eine andere Art der Beeinflussung der Elastizität der Hohlzylinder geht aus Anspruch 4 hervor. Danach ist vorgesehen, dass die Hohlzylinder einer Härtung unterworfen sein sollen.

Schließlich soll nach einem letzten Merkmal der Erfindung gemäß Anspruch 5 die Mantelfläche der Hohlzylinder geschliffen sein.

Die Erfindung wird an nachstehendem Ausführungsbeispiel näher erläutert.

### Kurze Beschreibung der Zeichnungen

Es zeigen:

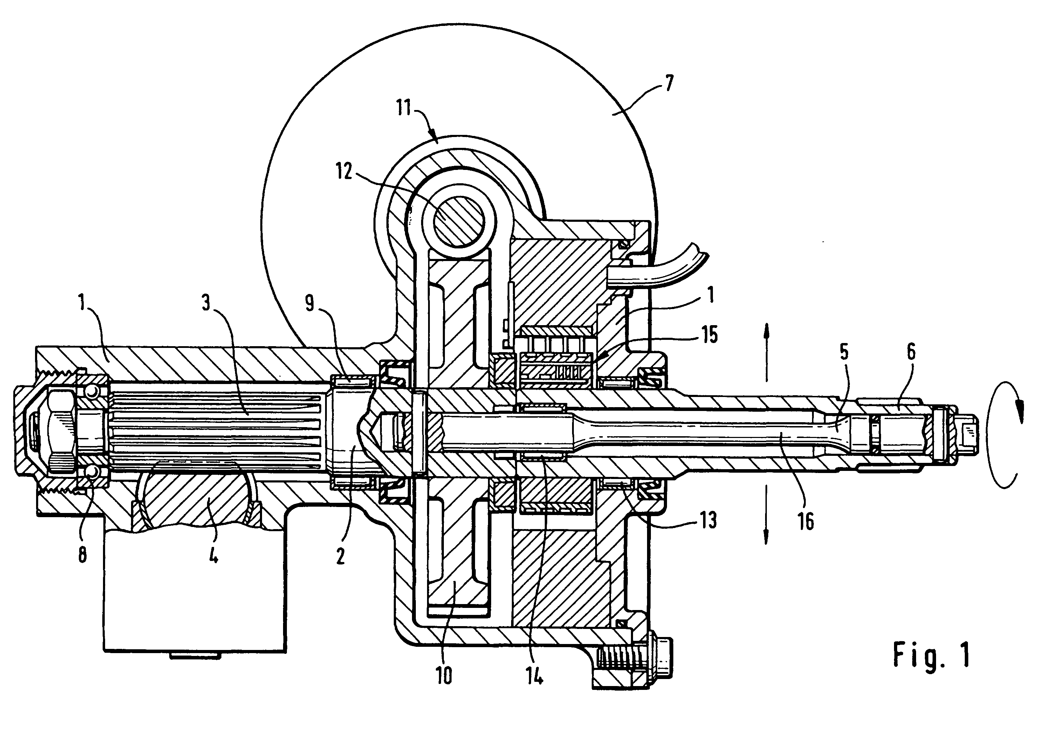

- Figur 1: einen Längsschnitt durch eine Hilfskraftlenkung am Beispiel einer Zahnstangenlenkung nach dem bisherigen Stand der Technik,
- Figur 2: ein Querschnitt durch ein erfindungsgemäß ausgestaltetes Wälzlager zur Lagerung der Eingangswelle,
- Figur 3: einen Längsschnitt durch das Wälzlager entlang der Linie III-III in Figur 2,
- Figur 4: eine vergrößerte Darstellung des erfindungsgemäßen Wälzlagers und
- Figur 5: einen Ausschnitt aus dem erfindungsgemäßen Wälzlager im belasteten Zustand.

### Ausführliche Beschreibung der Zeichnungen

Die Erfindung wird am Beispiel einer Hilfskraftlenkung mit einem Zahnstangengetriebe erläutert. In einem Lenkgehäuse, kurz als Gehäuse 1 bezeichnet, ist ein mit einer Ritzelwelle 2 verbundenes Ritzel 3 drehbar gelagert. Das Ritzel 3 stellt ein Ausgangsglied dar, dass über eine Zahnstange 4 mit nicht dargestellten, zu lenkenden Rädern in Wirkverbindung steht. Die Ritzelwelle 2 ist über einen um seine Achse 16 bewegbaren Drehstab 5 mit einer Eingangswelle 6 des Lenkgetriebes verbunden. Anstelle des Drehstabes 5 kann auch ein anderes drehelastisches Glied verwendet werden. Die Zahnstange 4 steht in trieblicher Verbindung mit einem als Elektromotor ausgeführten Servomotor 7. Die Ritzelwelle 2 ist im Gehäuse 1 linksseitig des Ritzels 3 durch ein Kugellager 8 und rechtzeitig durch ein Rollenlager 9 gehalten. Im Gehäuse 1 ist weiter auf der Ritzelwelle 2 ein Schneckenrad 10 eines Schneckengetriebes 11 befestigt, dessen nicht näher bezeichnete Zähne mit einer Schnecke 12 in Eingriff stehen. Die Eingangswelle 6 ist einerseits im Gehäuse 1 in Richtung des nicht dargestellten Lenkhandrades über ein weiteres Rollenlager 13 gehalten und andererseits über ein weiteres zusätzliches Lager 14 auf dem Drehstab 5 gelagert, wobei letztgenanntes Lager auch durchaus ein Gleitlager sein kann.

Ein an der Eingangswelle 6 anliegendes durch einen bogenförmigen Pfeil dargestelltes Lenkdrehmoment erzeugt einen Verdrehwinkel zwischen der Eingangswelle 6 und der Ritzelwelle 2. Dieser Verdrehwinkel ist ein Maß für das Lenkdrehmoment und wird von einer Erfassungseinheit 15 gemessen, die aus dem eigentlichen Sensor und dem Impulsgeber besteht, wobei entweder der Sensor oder der Impulsgeber mit der Eingangswelle 6 verbunden ist. Es ist erkennbar, dass bei einem Lager 13 mit großem Radialspiel die Eingangswelle 6 in Pfeilrichtung nach oben oder nach unten ausgelenkt werden kann. Durch diese Auslenkung der Eingangswelle 6 wird aber das Lenkdrehmoment von der Erfassungseinheit 15 falsch weitergeleitet, dass heißt, der Servomotor 7 zur Lenkunterstützung erhält falsche Steuerungsimpulse, die mit dem real vorhandenen Lenkdrehmoment nicht übereinstimmen. Hier setzt nun die Erfindung an.

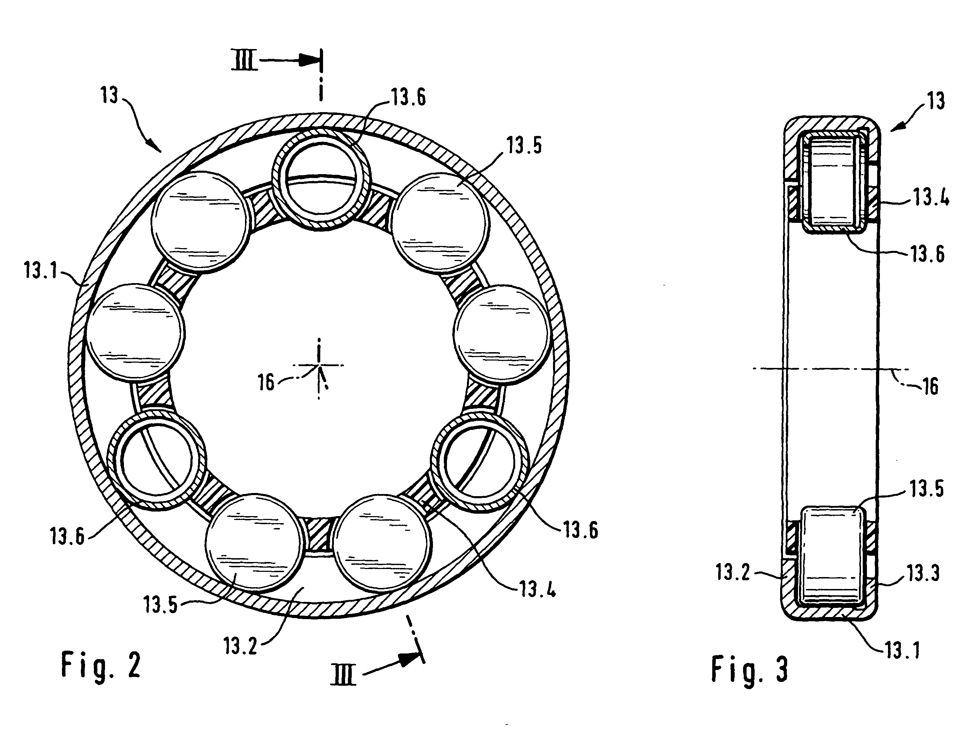

Wie die Figuren 2, 3 und 4 zeigen, besteht das erfindungsgemäße Rollenlager 13 aus dem Außenring 13.1, der sowohl links- als auch rechtsseitig mit zwei radial nach innen weisenden Borden 13.2 und 13.3 versehen ist. Ein aus massiven Zylinderrollen 13.5 und elastisch verformbaren Zylinderrollen 13.6 in Form von Hohlzylinderrollen bestehender Kranz mit dem Lagerkäfig 13.4 wälzt um die Achse 16 ab, wobei an drei gleichmäßig voneinander beabstandeten Umfangsstellen des Käfigs 13.4 die Hohlzylinder 13.6 angeordnet sind, die beidseitig mit einem umlaufenden Bord 13.6.1 und 13.6.2 versehen sind. Dabei sollen die Hohlzylinder 13.6 in ihrem Durchmesser geringfügig größer als die massiven Zylinderrollen 13.5 sein. Denkbar ist auch, dass sämtliche Wälzkörper des Rollenlagers 13 als elastisch verformbare Zylinderrollen 13.6 ausgebildet sind.

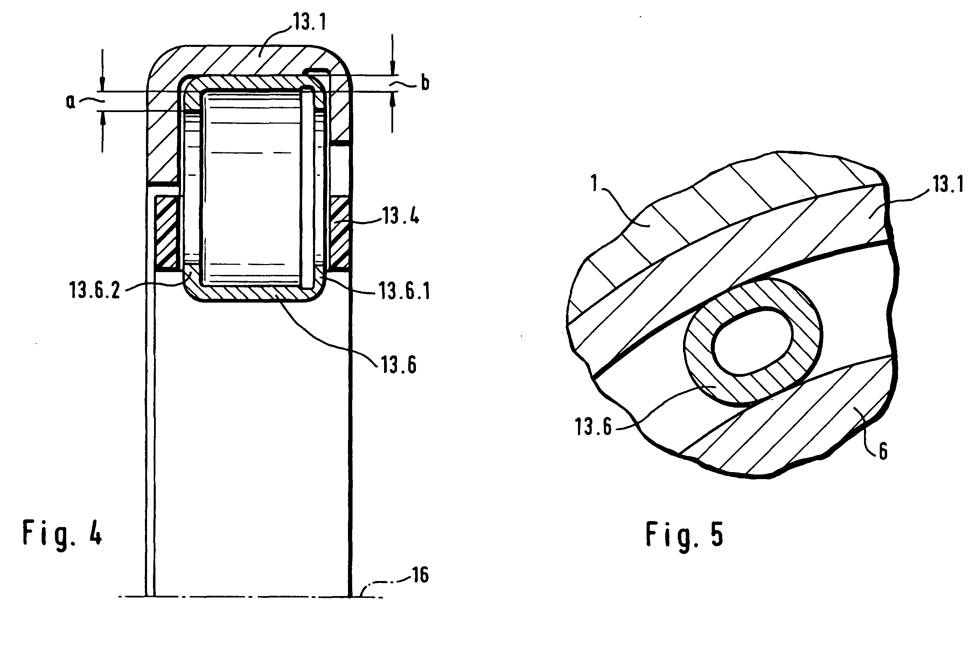

Wie insbesondere die Figur 5 zeigt, werden die Hohlzylinder 13.6 im belasteten Zustand verformt, dass heißt, sie nehmen die Form einer Ellipse an, die dann eine radiale Ausdehnung wie der Durchmesser der massiven nicht verformbaren Zylinderrollen 13.5 besitzt. Auf diese Weise ist sichergestellt, dass die Eingangswelle 6 immer exakt zentriert und gelagert ist, das heißt, sowohl mit als auch ohne Radiallast. Bei nicht vorhandener Radiallast wird die Eingangswelle 6 durch die im Durchmesser größeren Hohlzylinder 13.6 gehalten, während bei vorhandener Radiallast diese im Durchmesser verringert werden, so dass die Last durch die dazwischen angeordneten massiven Zylinderrollen 13.5 aufgenommen ist. Wie die Figur 4 weiter zeigt, entspricht die radiale Ausdehnung a der Borde 13.6.1 und 13.6.2 der Hohlzylinder 13.6 etwa deren Dicke b der Mantelfläche. Zur Verdeutlichung der Größenverhältnisse sei an dieser Stelle ausgeführt, dass bei Wälzkörpern des Rollenlagers 13 mit einem Durchmesser von etwa 10 mm von einer Durchmesserdifferenz zwischen massiven Zylinderrollen 13.5 und elastisch verformbaren Zylinderrollen 13.6 von etwa 50µm auszugehen ist.

### Bezugszeichen

- 1: Gehäuse
- 2: Ritzelwelle
- 3: Ritzel
- 4: Zahnstange
- 5: Drehstab
- 6: Eingangswelle
- 7: Servomotor
- 8: Kugellager
- 9: Rollenlager
- 10: Schneckenrad
- 11: Schneckengetriebe
- 12: Schnecke
- 13: Rollenlager
- 13.1: Außenring
- 13.2: Bord
- 13.3: Bord
- 13.4: Käfig
- 13.5: massive Zylinderrolle
- 13.6: elastisch verformbare Zylinderrolle
- 13.6.1: Bord
- 13.6.2: Bord
- 14: Lager
- 15: Erfassungseinheit
- 16: Achse

- a: radiale Ausdehnung
- b: Dicke der Mantelfläche

## Patentansprüche

1. Elektrisch unterstützte Hilfskraftlenkung für Kraftfahrzeuge mit einer Eingangswelle (6), die mit einem Lenkrad zur Übertragung eines Lenkdrehmomentes in Wirkverbindung steht, einem Ausgangsglied, das mit zu lenkenden Rädern in Wirkverbindung steht, mit einem Servomotor (7), der direkt oder indirekt eine Hilfskraft auf die Eingangswelle (6) oder das Ausgangsglied ausübt, wobei die Eingangswelle (6) und das Ausgangsglied über ein drehelastisches Glied derart miteinander verbunden sind, daß zwischen der Eingangswelle (6) und dem Ausgangsglied eine begrenzte Verdrehbewegung möglich ist und mit einer Erfassungseinheit (15), die mindestens einen Sensor zum Erfassen der Richtung und der Stärke des auf die Eingangswelle (6) wirkenden Lenkdrehmomentes enthält, wobei die Eingangswelle (6) an ihrem dem Lenkrad zugewandten Ende in einem Gehäuse (1) über ein Wälzlager abgestützt ist, **dadurch gekennzeichnet, daß** das Wälzlager als ein elastisch nachgiebiges Rollenlager (13) ausgebildet ist, dessen Zylinderrollen (13.5, 13:6) wenigstens an einer Umfangsstelle eine elastisch verformbare Zylinderrolle (13.6) aufweisen, deren Durchmesser geringfügig größer als der Durchmesser der übrigen Zylinderrollen (13.5) ist, wobei die elastisch verformbaren Zylinderrollen (13.6) als dünnwandige spanlos geformte Hohlzylinder ausgebildet sind, die an beiden gegenüberliegenden Enden mit je einem radial nach innen weisenden Bord (13.6.1,13.6.2) versehen sind.

2. Lenkung nach Anspruch 1, **dadurch gekennzeichnet, daß** die elastisch verformbaren Zylinderrollen (13.6) an drei gleichmäßig voneinander beabstandeten Umfangsstellen angeordnet sind.

3. Lenkung nach Anspruch 1, **dadurch gekennzeichnet, daß** die radiale Ausdehnung (a) der Borde (13.6.1,13.6.2) der Dicke (b) der Mantelfläche der Hohlzylinder entspricht.

4. Lenkung nach Anspruch 1, **dadurch gekennzeichnet, daß** die Hohlzylinder einer Härtung unterworfen sind.

5. Lenkung nach Anspruch 1, **dadurch gekennzeichnet, daß** die Mantelfläche der Hohlzylinder geschliffen ist.

## Claims

1. Electrically assisted power steering system for motor vehicles, having an input shaft (6) which is operatively connected to a steering wheel in order to transmit a steering torque, an output element which is operatively connected to wheels to be steered, having a servomotor (7) which exerts an assisted force directly or indirectly to the input shaft (6) or the output element, the input shaft (6) and the output element being connected to one another via a rotationally elastic element in such a way that a limited rotational movement is possible between the input shaft (6) and the output element, and having a sensing unit (15) which comprises at least one sensor for sensing the direction and the magnitude of the steering torque which acts on the input shaft (6), the input shaft (6) being supported, at its end which faces the steering wheel, via a roller bearing in a housing (1), **characterized in that** the roller bearing is configured as an elastically compliant roller bearing (13), the cylindrical rollers (13.5, 13.6) of which have at least at one circumferential location an elastically deformable cylindrical roller (13.6), the diameter of which is slightly larger than the diameter of the remaining cylindrical rollers (13.5), the elastically deformable cylindrical rollers (13.6) being configured as thin-walled hollow cylinders which are formed without cutting and are provided at both opposite ends with in each case one radially inwardly pointing rim (13.6.1, 13.6.2).

2. Steering system according to Claim 1, **characterized in that** the elastically deformable cylindrical rollers (13.6) are arranged at three circumferential locations which are spaced apart from one another uniformly.

3. Steering system according to Claim 1, **characterized in that** the radial extent (a) of the rims (13.6.1, 13.6.2) corresponds to the thickness (b) of the circumferential surface of the hollow cylinders.

4. Steering system according to Claim 1, **characterized in that** the hollow cylinders are subjected to a hardening process.

5. Steering system according to Claim 1, **characterized in that** the circumferential surface of the hollow cylinders is ground.

## Revendications

1. Direction assistée électriquement pour des véhicules à moteur avec un arbre d'entrée (6), qui se trouve en liaison active avec un volant de direction pour transmettre un couple de direction, un élément de sortie, qui est en liaison active avec des roues à diriger, avec un servomoteur (7), qui exerce directement ou indirectement une force d'assistance sur l'arbre d'entrée (6) ou l'élément de sortie, l'arbre d'entrée (6) et l'élément de sortie étant reliés l'un à l'autre par un élément à élasticité rotative de sorte qu'un mouvement de torsion limitée est possible entre l'arbre d'entrée (6) et l'élément de sortie, et avec une unité de détection (15) qui contient au moins un capteur pour détecter la direction et l'intensité du couple de direction agissant sur l'arbre d'entrée (6), l'arbre d'entrée (6) au niveau de son extrémité tournée vers le volant de direction étant supporté dans un boîtier (1) par un palier à roulement, **caractérisé en ce que** le palier à roulement est conçu sous la forme d'un palier à rouleaux (13) élastiquement souple, dont les rouleaux cylindriques (13.5, 13.6) présentent un rouleau cylindrique (13.6) élastiquement déformable au moins au niveau d'une position périphérique, dont le diamètre est à peine supérieur au diamètre des autres rouleaux cylindriques (13.5), les rouleaux cylindriques élastiquement déformables (13.6) étant conçus sous la forme de cylindres creux à paroi mince, formés sans enlèvement de copeaux, munis au niveau des deux extrémités opposées, de respectivement un bord dirigé radialement vers l'intérieur (13.6.1, 12.6.2).

2. Direction selon la revendication 1, **caractérisée en ce que** les rouleaux cylindriques (13.6) élastiquement déformables, sont disposés au niveau de trois positions périphériques régulièrement espacées l'une de l'autre.

3. Direction selon la revendication 1, **caractérisée en ce que** l'extension radiale (a) des bords (13.6.1, 13.6.2) correspond à l'épaisseur (b) de la surface latérale des cylindres creux.

4. Direction selon la revendication 1, **caractérisée en ce que** les cylindres creux sont soumis à un durcissement.

5. Direction selon la revendication 1, **caractérisée en ce que** la surface latérale des cylindres creux est rectifiée.
